# EUROPEAN PATENT SPECIFICATION

(11) **EP 1 270 300 B1**
(45) Date of publication and mention of the grant of the patent: **07.06.2006**
(21) Application number: 02253562.9
(22) Date of filing: 21.05.2002
(51) Int. Cl.: B60K 5/12

(54) **Support bracket for power unit**
Stützkonsole für eine Antriebseinheit
Console d'appui pour groupe moto-propulseur

(30) Priority: 27.06.2001 JP 2001194888
(43) Date of publication of application: 02.01.2003
(73) Proprietor: NISSAN MOTOR COMPANY LIMITED, Yokohama-shi, Kanagawa 221-0023 (JP)
(72) Inventor: Kakiuchi, Takeshi, Fujisawa-shi, Kanagawa-ken (JP)
(74) Representative: Godwin, Edgar James

(56) References cited:
- JP-U- 2 051 978
- PATENT ABSTRACTS OF JAPAN vol. 0162, no. 26 (M-1254), 26 May 1992 (1992-05-26) & JP 4 043172 A (NISSAN MOTOR CO LTD), 13 February 1992 (1992-02-13)

## Description

The present invention relates to a support bracket, which is applied to a case when a support platform for a power unit mounted in a front end of a vehicle body is offset in width direction of vehicle body with respect to frame members of the vehicle body.

Vehicles such as automobiles have an engine room equipped with a power unit including such as an engine, an electric motor, etc. in the front end. At lower portions of both sides in width direction of the engine room, frame members, which are called front side members, hood ledge uppers, etc, are provided in a state that they are headed in a longitudinal direction. Moreover, the engine room includes suspension spring supports for supporting a spring of a front suspension. The power unit is supported on a platform using the front side members, which are frame members, by an engine mount.

Even in the same models of vehicles, various power units are sometimes mounted, and the power unit side mounting positions and the front side member positions are often offset in the width direction of vehicle when no modification is made to the design of platform in each case . As a technique of a bracket for supporting a power unit to allow the offset, an engine mount bracket is proposed, which is disclosed in Japanese Examined Utility Model Publication No. 7-46601.

The proposed engine mount bracket is provided across the front side members and hood ledge uppers and coupled thereto. The front side members and the hood ledge uppers are manufactured separately, and they are combined into one later. It is difficult to avoid occurrence cf a combination error. The aforementioned engine mount bracket has coupling portions to be coupled to the respective parts and allowance is given to the coupling portions to absorb the above-mentioned error.

An attaching seat surface of the lower end of the engine mount bracket occupies substantially the entire width of the upper side surface of each front side member, and the error that can be absorbed by the coupling portions is extremely limited. Moreover, each front side member has a flange for welding at the outside of the width direction of the vehicle, and is restricted by the flange, so that the width that can be occupied by the attaching seat surface is limited. This also brings about a drawback in which absorption of error is limited.

Moreover, pitching moment acts on the bracket when the power unit oscillates back and forth. In order to ensure attaching strength against this, it is preferable that a span between the coupling portions in the longitudinal direction should be made larger. However, the aforementioned engine mount bracket cannot ensure the large span due to obstruction by a battery, a suspension spring support and the like provided on the upper surfaces of the front side members.

The present invention has been made with consideration given to the aforementioned problems, and it is an object of the present invention to provide a support bracket for a power unit that facilitates absorption of an error to frame members of a vehicle body that support the power unit and makesit possible to ensure attaching strength against the pitching moment of the power unit.

A support bracket of the present invention includes a first bracket and a second bracket. The first bracket includes a support platform to which a support member supporting a power unit is attached and a first wall surface that is coupled to a lower frame member of an engine room of a vehicle. The second bracket includes a second wall surface that is coupled to an upper frame member of the engine room. The first bracket and the second bracket further include a coupling surface that couples these brackets together and that can allow relative displacement between the first bracket and the second bracket.

The support bracket includes the first bracket and the second bracket and allows adjustment of a relative position therebetween. For this reason, even if relatively a large error occurs in combination of the front side member and hood ledge upper, the error can be absorbed.

In the support bracket, the first wall surface is preferably coupled to an inner side surface of the lower frame member, and the span between the coupling portions on the first wall surface is set to be larger than a space between the support platform and the upper side surface of the lower frame member.

According to the above structure, since the support bracket is coupled to not the upper side surface of the front side member but the inner side surface thereof, a long fixed span can be ensured without obstruction caused by the battery and the suspension spring support that the upper surface includes.

In the support bracket, the coupling surface preferably includes a plurality of coupling points arranged in a longitudinal direction of a vehicle body, and the coupling surface is placed to be close to the support platform and a suspension spring support that the engine room includes.

According to the above structure, offset between the coupling points and the center of the moment and offset between the coupling surface and the suspension spring support can be made extremely small, respectively, so that pitching moment that acts on the support bracket can be minimized.

More preferably, the second bracket includes a coupling wall surface that is coupled to the suspension spring support integrally with the second wall surface.

According to the above structure, since a tangential force of the pitching moment that acts on the support bracket is transmitted to the hood ledge uppers and the suspension spring support as a force of the joint surface of the second bracket, the second bracket is prevented from being locally deformed out of plane.

Still more preferably, the first wall surface of the first bracket includes a concave end portion at the spring support side.

According to the above structure, even if the first bracket is attached to be close to or contact the suspension spring support, a space between the first bracket and the suspension spring support is ensured by the concave end portion. The use of this space makes it possible to easily provide a wiring harness to electrical components of the engine room.

Still more preferably, the first bracket includes one or more vertical ribs and one or more horizontal ribs on the coupling surface, the support platform,and the rear surface of the first wall surface integrally, and the first ribs connect the first coupling surface, the support platform, and the first wall surface together at their rear surfaces, and the horizontal ribs cross the vertical ribs.

According to the above structure, since stress can be dispersed by these ribs even if the moment acts from the power unit, the first bracket can be prevented from being locally deformed.

### BRIEF DESCRIPTION OF THE DRAWINGS

Fig. 1 is a perspective view showing a state in which a support bracket according to an embodiment of the present invention is attached to a vehicle body;
Fig. 2 is a front view showing a state in which a support bracket according to the embodiment of the present invention is attached to a vehicle body;
Fig. 3 is a plane view showing a state in which a support bracket according to the embodiment of the present invention is attached to a vehicle body;
Fig. 4 is a cross-sectional view of the support bracket according to the embodiment of the present invention taken along line IV-IV of Fig. 3;
Fig. 5 is a plane view of an engine room of the front side of the vehicle body to which the support bracket according to the embodiment of the present invention is attached;
Fig. 6 is a perspective view of a front surface of a first bracket according to the embodiment of the present invention;
Fig. 7 is a perspective view of a rear surface of the first bracket according to the embodiment of the present invention; and
Fig. 8 is a perspective view of a second bracket seen obliquely from the upper portion.

### DETAILED DESCRIPTION OF THE PREFERRED EMBODIMENT

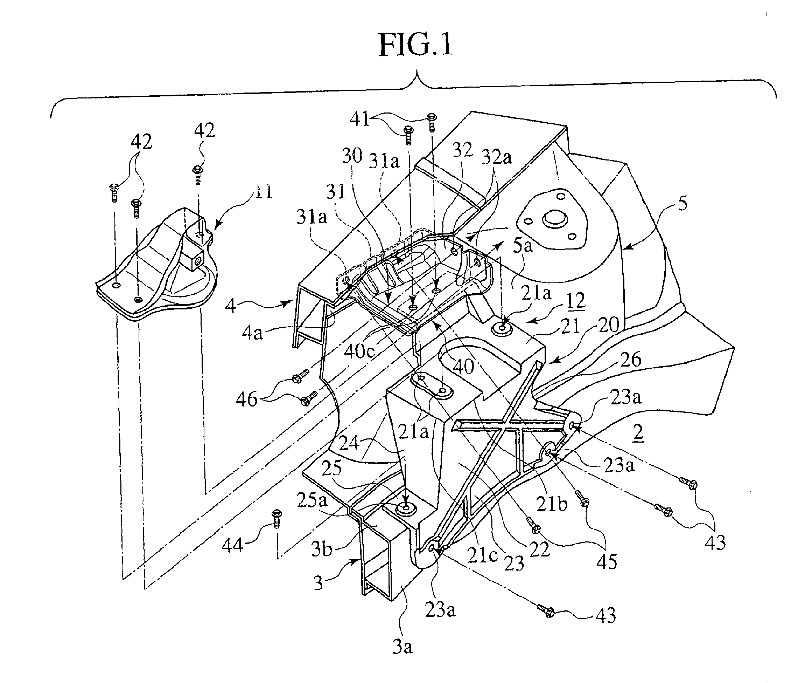

The following will explain an embodiment of the present invention with reference to Figs. 1 to 8. In the explanation hereinafter, it is assumed that a front side is a side facing to a direction where a vehicle is moved forward and that a rear side is the opposite side. Moreover, it is assumed that a direction that passes through the front and back of the vehicle is a vehicle longitudinal direction and that a direction which is orthogonal to the vehicle longitudinal direction,on a horizontal surface, is width direction of the vehicle.

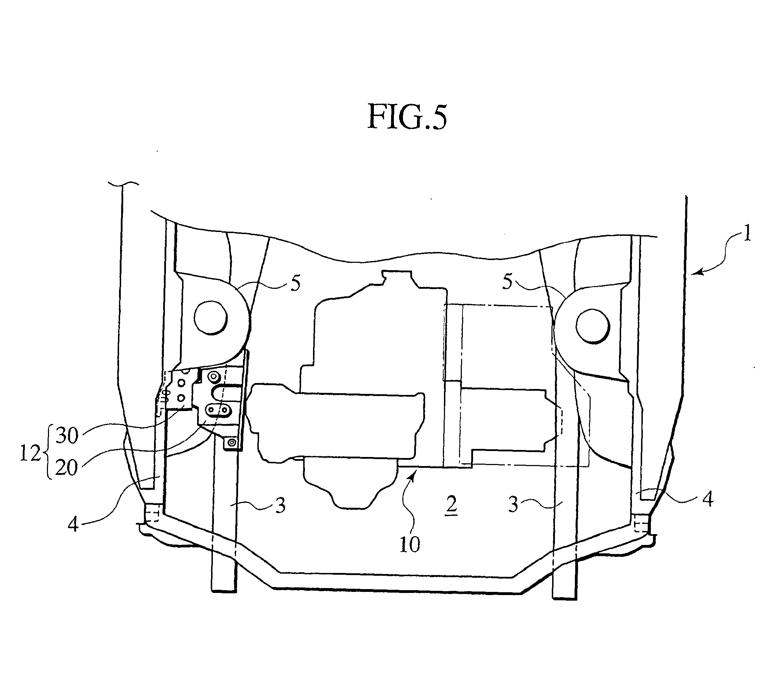

A front side of a vehicle 1 includes an engine room 2 as illustrated in Fig. 5. A pair of front side members 3, as lower frame members, extends in the vehicle longitudinal direction at the lower portions of both sides in width direction of the engine room 2. Moreover, at both sides in the width direction of the engine room 2 and the upper portion than the front side members 3, a pair of hood ledge uppers 4, as upper frame members, extends in the vehicle longitudinal direction. Seen from the upper portion, the hood ledge uppers 4 are positioned at the outer side than the front side members 3.

A pair of strut towers 5, as suspension spring supports, is provided at slightly backward of both sides of the engine room 2, and one end of the suspension spring is coupled to each lower side. A power unit 10, which includes an engine, a transaxle, etc., is mounted at approximately a central portion of the engine room 2.

An engine mount 11, as a support member, is attached to a support bracket 12 as shown in Fig. 1, and the power unit 10 is supported by the engine mount 11. The engine mount 11 has an elastically deformable structure, thereby the power unit 10 is elastically supported by the front side members 3 via the engine mount 11.

The engine mount 11 is offset in width direction with respect to the front side member 3, and positioned at the outer than the front side member 3.

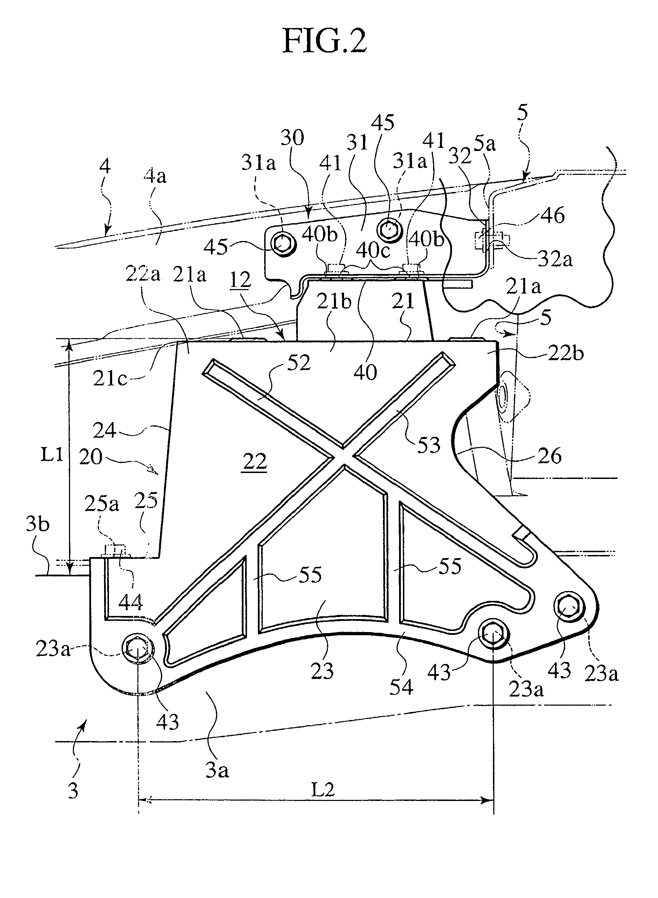

In this embodiment, the support bracket 12 is composed of a first bracket 20 and a second bracket 30. The first bracket 20 includes a power unit support platform 21 to which the engine mount 11 is fixed and a first wall surface 22 coupled to the front side member 3. The second bracket 30 includes a second wall surface 31 coupled to the hood ledge upper 4. The first bracket 20 and second bracket 30 are coupled to each other such that relative displacement in width direction is allowed by a coupling surface 40, which is shared by both brackets and which is a horizontal surface, as shown in Fig. 2.

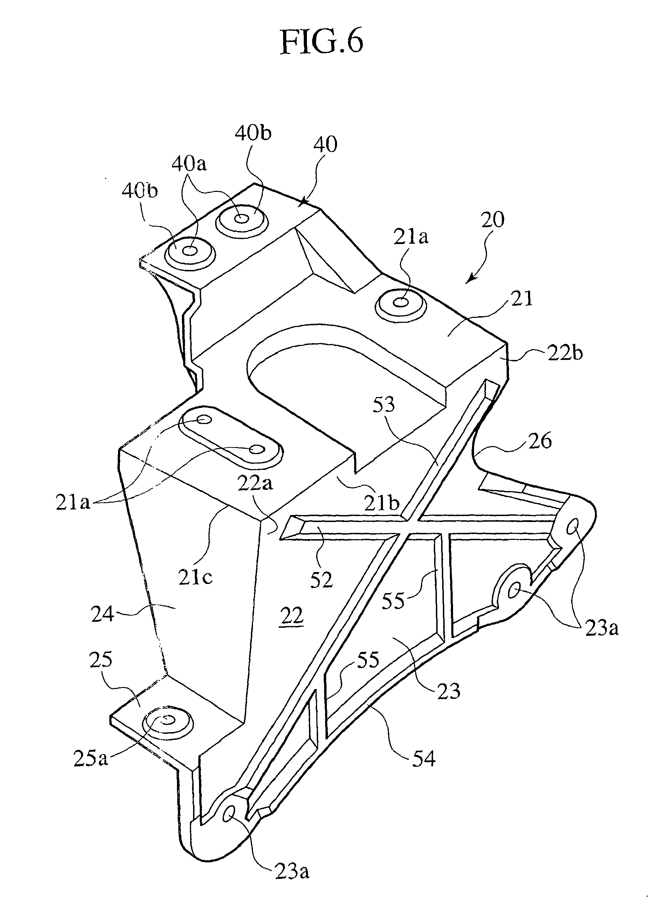

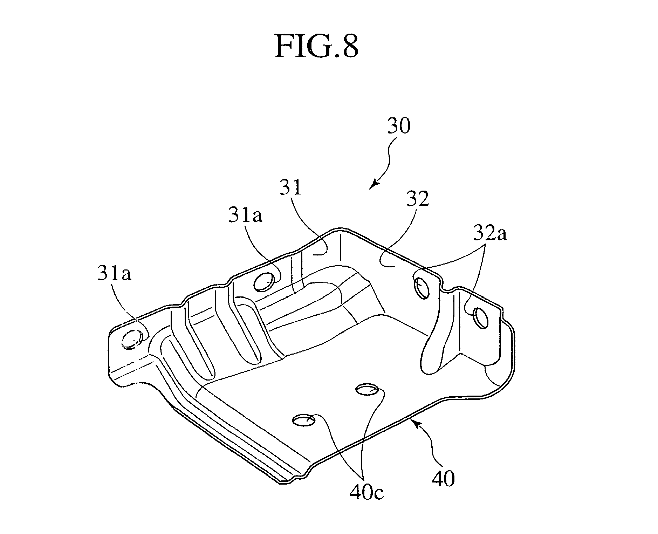

Bolt holes 40a, each having a seat 40b, which are a plurality (two in this embodiment) of coupling points arranged in the vehicle longitudinal direction, are formed on the coupling surface 40 of first bracket 20 as shown in Fig. 6. Position adjusting holes 40c, each having a larger diameter than the corresponding bolt hole 40a, are formed on the coupling surface 40 of the second bracket 30 as shown in Fig. 8.

Bolts 41 are inserted into the bolt holes 40a from the position adjusting holes 40c so that they are fastened respectively and the first bracket 20 is coupled to the second bracket 30. Since the diameter of each position adjusting hole 40c has a clearance larger than the bolt 41, the relative positions between the first bracket 20 and second bracket 30 can be adjusted horizontally.

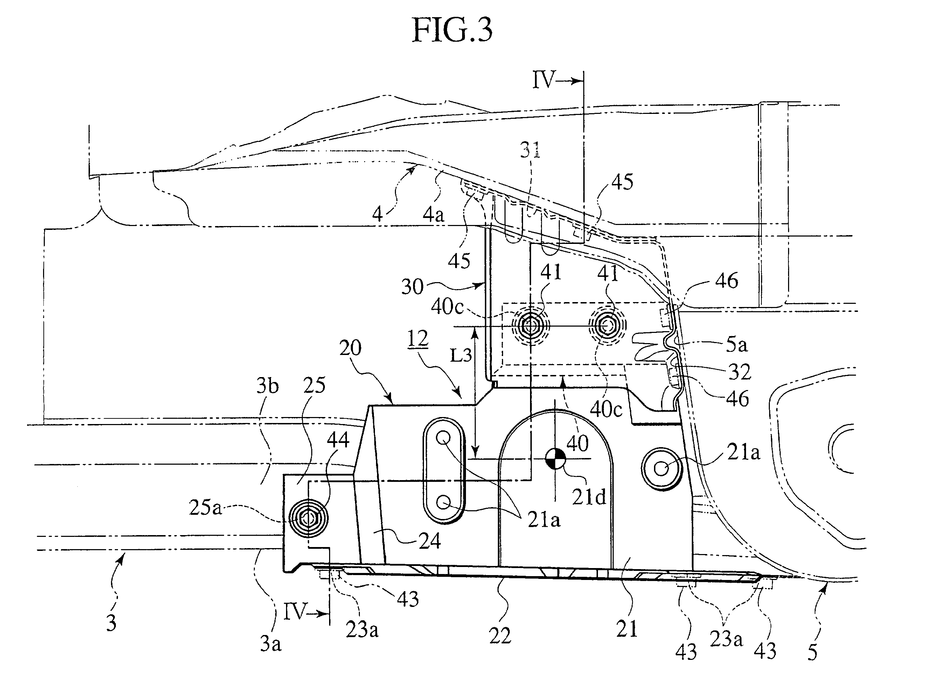

The power unit support platform 21 has a horizontal surface, which is close to the coupling surface 40 and which is below the coupling surface 40, as shown in Fig. 6. The engine mount 11 is fixed to bolt holes 21a formed on the power unit platform 21 via bolts 42 as shown in Fig. 1. The bolt holes 21a are formed such that one is placed backward on the coupling surface and two are arranged forward in the width direction. Additionally, reference numeral 21d of Fig. 3 denotes a center of moment of the engine mount 11 when the power unit 10 oscillates back and forth.

The first wall surface 22 is provided in a hanging manner from an inner edge 21b of the power unit support platform 21 and its lower side is an attaching surface 23 to the vehicle body 1 as shown in Fig. 6. The attaching surface 23 is fixed onto an inner side surface 3a of the front side member 3. The attaching surface 23 of the first wall surface 22 is widely formed in the vehicle longitudinal direction, and has a plurality of attaching holes 23a (three in this embodiment) , which are formed to be arranged in the vehicle longitudinal direction. The attaching surface 23 is fixed to the inner side wall 3a of the front side members 3 by bolts 43 inserted into the attaching holes 23a.

A front side wall 24 is provided in a hanging manner from a front side edge 21c of power unit support platform 21 and has an upper attaching surface 25 integrally formed at its lower side to be able to be fixed to an upper side surface 3b of the front side members 3. The front side wall surface 24 and the upper attaching surface 25 are coupled to the first wall 22 integrally as shown in Fig. 6.

Among the plurality of attaching holes 23a that the attaching surface 23 of first wall surface 22 has, a span L2 between the forefront hole and the rearmost hole is designed to be larger than a space L1 between the power unit support platform 21 and the upper side surface 3b of the front side members 3.

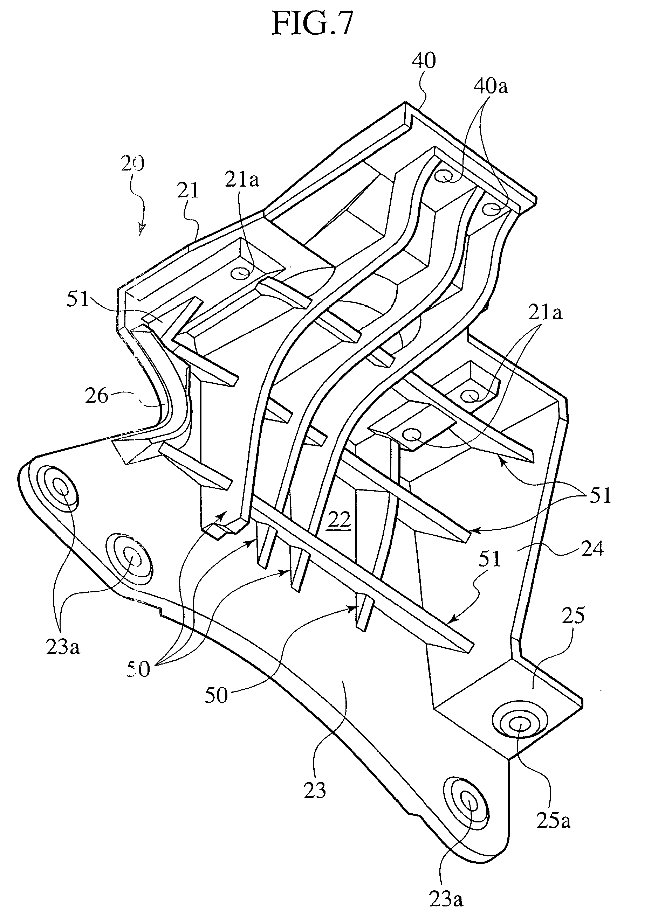

The first bracket 20 is made of a metal for a casting, and molded integrally. On the rear surface of the first bracket 20, a plurality of vertical ribs 50 and a plurality of horizontal ribs 51 are integrally formed as illustrated in Fig. 7. The vertical ribs 50 connect the coupling surface 40, the support platform 21 and first wall surface 22 together at their rear surfaces, and the horizontal ribs 51 cross the vertical ribs 50.

Among the plurality of vertical ribs 50, three ribs extend from both sides of two position adjusting holes 40c, which are provided with the coupling surface 40, and the intermediate portion therebetween, and the other two ribs extend from the bolt holes 21a, which are provided with the power unit support platform 21. The horizontal ribs 51 are integrally coupled to the front side wall 24 at their front end portions. Crossed ribs 52 and 53 are integrally formed on the front surface of the first wall surface 22 as illustrated in Fig. 6. The crossed rib 52 extends to the rearmost attaching hole 23a from a corner 22a, which is the front end of attaching surface 23 and which is close to the power unit support platform 21. The crossed rib 53 extends to the front attaching hole 23a from a corner 22b, which is the back end of attaching surface 23 and which is close to the power unit support platform 21.

A plurality of connecting ribs 55 extend between the crossed ribs 52, 53 and a lower end rib 54 integrally formed close to the lower end of attaching surface 23, and the connecting ribs 55 has a suitable distance therebetween.

The first bracket 20 and second bracket 30 are arranged close to the front of the strut tower 5 as shown in Fig. 1. The first wall surface 22 of first bracket 20 has an end portion 26 of which rear side end portion, which faces the strut tower 5, has a smooth concave shape.

The second bracket 30, which is made of a steel sheet, is formed by pressing and the like, and the outer side portion thereof is raised upward to form the second wall surface 31 as illustrated in Fig. 8. The second wall surface 31 has two attaching holes 31a arranged in the vehicle longitudinal direction. The second wall surface 31 is fastened to an inner side surface 4a of the hood ledge upper 4 by bolts 45 inserted into the attaching holes 31a.

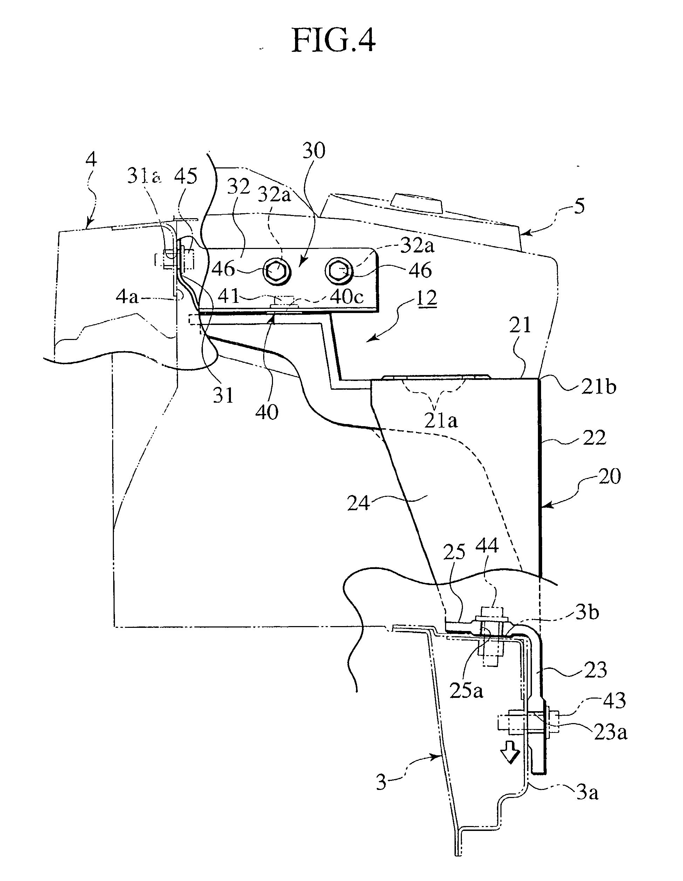

A coupling wall surface 32 to the strut tower 5 to be continuous to the second wall surface 31 is formed to be raised at the back of second bracket 30 as illustrated in Figs. 1 and 8. The coupling wall surface 32 has two attaching holes 32a arranged in the width direction of the vehicle. The coupling wall surface 32 is fastened to an upper end surface 5a of strut tower 5 by bolts 46 inserted thereto as shown in Fig. 4.

As described above, the support bracket 12 that supports the power unit 10 is composed of two members of the first bracket 20 and second bracket 30. The first bracket 20 is coupled to the front side member 3 by the first wall surface 22, and the second bracket 30 is coupled to the hood ledge upper 4 by the second wall surface 31. Since both brackets 20 and 30 allow adjustment of relative position in the width direction of vehicle, the support bracket 12 can be attached even if the vehicle body 1 is not manufactured with extremely high accuracy.

Accordingly, even if the engine mount 11 of the power unit 10 and the front side member 3 are offset in the width direction of the vehicle, the engine mount 11 can be attached to the power unit support platform 21 of first bracket 20 accurately.

At the front and back of the upper side surface 3b of the front side member 3, a battery, strut tower 5, etc. are provided. Since the first bracket 20 is coupled to not the upper side surface 3b of front side members 3 but the inner side surface 3a by the attaching surface 23, the first bracket 20 can ensure a relatively long fixed span L2 without being obstructed by the above components .

Accordingly, as shown in Fig. 2, among the plurality of attaching holes 23a that the attaching surface 23 of first wall surface 22 has, the span L2 between the forefront hole and the rearmost hole can be ensured larger than the space L1 between the power unit support platform 21 and the upper side surface 3b of the front side member 3. For this reason, even if pitching moment, which is attributed to the oscillation of the power unit 10 in the longitudinal direction, acts on the support bracket 12, sufficient attaching strength against the moment is ensured.

Since the first wall surface 22 is coupled to the inner side surface 3a of the front side member 3, a load of the power unit 10 that acts on the first bracket 20 is transmitted to the front side members 3 from the first wall surface 22 as a shearing force.

The coupling surface 40, which couples the first bracket 20 and the second bracket 30 together, is close to the power unit support platform 21 and the strut tower 5, and a plurality of bolt holes 40a, which couples the first bracket 20 and the second bracket 30 , is formed on the coupling surface 40 in the vehicle longitudinal direction. This makes it possible to minimize offset L3 between the bolt holes 40a and the center 21d of moment and offset (zero in this embodiment) between the coupling surface 40 and strut tower 5. Accordingly, even if the power unit 10 is oscillated in the longitudinal direction, the pitching moment acts on the support bracket 12 from the engine mount 11 is possible to be minimized.

Since the second wall surface 31 of the second bracket 30 integrally includes the coupling wall surface 32 that couples the strut tower 5, a tangential force of the pitching moment that acts on the support bracket 12 is transmitted to the hood ledge uppers 4 and strut tower 5 as a force of the joint surface inside of the second bracket 30, the second bracket 30 is prevented from being locally deformed out of plane.

Since the strut tower 5, which takes action from the suspension, and the front side member 3 are coupled to each other via the first and second brackets 20 and 30, so that the action from the suspension is dispersed to the front side members 3, it is possible to obtain an effect that increases the strength and rigidity of vehicle body.

Moreover, a wiring harness is provided in the engine room 2 to drive various electrical components though it is not shown in the figures. In the case of the first bracket 20 is attached to be close to or contact the strut tower 5, a space between the first bracket 20 and the strut tower 5 is ensured by a concave end portion 26. The use of this space makes it possible to provide the wiring harness easily. Moreover, the concave end portion 26 has a smooth shape to prevent the wiring harness from being damaged by the corner.

Moreover, since the first bracket 20 has the plurality of vertical ribs 50 and horizontal ribs 51 integrally, which cross each other, stress can be dispersed by these ribs when the moment acts from the power unit 10. This prevents the first bracket 20 from being locally deformed.

Still more, since the ribs 52 and 53 are also integrally formed on the surface of the first wall surface 22, internal rigidity of the first wall surface 22 increases to prevent local deformation. Since rigidity is increased by the lower ribs 54 and the connecting ribs 55, which the attaching surface 23 has these integrally, coupling rigidity with the front side members 3 is increased.

Although the invention has been described above by reference to certain embodiments of the invention, the invention is not limited to the embodiments described above. Modifications and variations of the embodiments described above will occur to those skilled in the art, in light of the above teachings.

## Claims

1. A support bracket for a power unit (10), comprising:
a first bracket (20) including:
a support platform (21) for attachment to a support member (11) supporting the power unit (10); and
a first wall surface (22) for connection with a lower frame member (3) of an engine room (2) of a vehicle body (1); and
a second bracket (30) including a second wall surface (31) for connection with an upper frame member (4) of the engine room (2);
wherein the first bracket (20) and the second bracket (30) further include a coupling surface (40) which couples these brackets together, and the coupling surface (40) can allow relative displacement between the first bracket (20) and the second bracket (30).

2. The support bracket for the power unit (10) according to claim 1, wherein:
the first wall surface (22) is fixed to an inner side wall surface (3a) of the lower frame member (3); and
a span between coupling portions (23a) on the first wall surface (22) is larger than a space between the support platform (21) and an upper side surface (3b) of the lower frame member (3).

3. The support bracket for the power unit (10) according to any one of claims 1 and 2, wherein:
the coupling surface (40) comprises a plurality of coupling points (21a) arranged in a longitudinal direction of a vehicle body (1); and
the coupling surface (40) is placed to be close to the support platform (21) and a suspension spring support (5) provided with the engine room (2).

4. The support bracket for the power unit (10) according to any one of claims 1 to 3, wherein:
the second bracket (30) comprises a coupling wall surface (32) for connection with the suspension support (5) integrally with the second wall surface (31).

5. The support bracket for the power unit (10) according to any one of claims 1 to 4, wherein:
the first wall surface (22) of the first bracket (20) comprises a concave end portion (26) at a side of the spring support (5).

6. The support bracket for the power unit (10) according to any one of claims 1 to 5, wherein:
the first bracket (20) comprises one or more first ribs (50) and one or more second ribs (51) on the coupling surface (40), the support platform (21), and the rear surface of the first wall surface (22) integrally; and
the first ribs (50) connect the first coupling surface (40), the support platform (21), and the first wall surface (22) together at their rear surfaces, and the second ribs (51) cross the first ribs (50).

## Patentansprüche

1. Stützkonsole für eine Antriebseinheit (10), umfassend:
eine erste Konsole (20), die Folgendes umfasst:
eine Stützplattform (21) für die Anbringung an einem Stützelement (11), das die Antriebseinheit (10) abstützt; und
eine erste Wandfläche (22) für die Verbindung mit einem unteren Rahmenelement (3) eines Motorraums (2) einer Fahrzeugkarosserie (1); und
eine zweite Konsole (30), die eine zweite Wandfläche (31) für die Verbindung mit einem unteren Rahmenelement (4) des Motorraums (2) umfasst;
wobei die erste Konsole (20) und die zweite Konsole (30) außerdem eine Kupplungsfläche (40) umfassen, die diese Konsolen miteinander kuppelt, und die Kupplungsfläche (40) eine relative Verschiebung zwischen der ersten Konsole (20) und der zweiten Konsole (30) zulassen kann.

2. Stützkonsole für die Antriebseinheit (10) nach Anspruch 1, bei der:
die erste Wandfläche (22) an einer Innenseiten-Wandfläche (3a) des unteren Rahmenelementes (3) befestigt ist; und
eine Stützweite zwischen den Kupplungsteilen (23a) an der ersten Wandfläche (22) größer ist als ein Abstand zwischen der Stützplattform (21) und einer oberen Seitenfläche (3b) des unteren Rahmenelementes (3).

3. Stützkonsole für die Antriebseinheit (10) nach einem der Ansprüche 1 und 2, bei der:
die Kupplungsfläche (40) eine Vielzahl von Kupplungspunkten (21a) umfasst, die in einer Längsrichtung einer Fahrzeugkarosserie (1) angeordnet sind; und
die Kupplungsfläche (40) so positioniert ist, dass sie in der Nähe der Stützplattform (21) und einer im Motorraum (2) bereitgestellten Aufhängefederstütze (5) liegt.

4. Stützkonsole für die Antriebseinheit (10) nach einem der Ansprüche 1 bis 3, bei der:
die zweite Konsole (30) eine Kupplungswandfläche (32), die mit der zweiten Wandfläche (31) eine integrale Einheit bildet, für die Verbindung mit der Federstütze (5) umfasst.

5. Stützkonsole für die Antriebseinheit (10) nach einem der Ansprüche 1 bis 4, bei der:
die erste Wandfläche (22) der ersten Konsole (20) einen konkaven Endteil (26) an einer Seite der Federstütze (5) umfasst.

6. Stützkonsole für die Antriebseinheit (10) nach einem der Ansprüche 1 bis 5, bei der:
die erste Konsole (20) eine oder mehrere erste Rippen (50) und eine oder mehrere zweite Rippen (51) an der Kupplungsfläche (40), der Stützplattform (21) und der Rückseite der ersten Wandfläche (22) als integrale Einheit umfasst; und
die ersten Rippen (50) die erste Kupplungsfläche (40), die Stützplattform (21) und die erste Wandfläche (22) an ihren Rückseiten miteinander verbinden und die zweiten Rippen (51) die ersten Rippen (50) kreuzen.

## Revendications

1. Console de support pour un bloc moteur (10), comprenant:
une première console (20), englobant:
une plate-forme de support (21) destinée à être fixée sur un élément de support (11) supportant le bloc moteur (10); et
une première surface de paroi (22) destinée à être connectée à un élément de châssis inférieur (3) d'un compartiment moteur (2) d'une carrosserie de véhicule (1); et
une deuxième console (30), englobant une deuxième surface de paroi (31) destinée à être connectée à un élément de châssis supérieur (4) du compartiment moteur (2);
la première console (20) et la deuxième console (30) englobant en outre une surface d'accouplement (40) assurant l'accouplement de ces consoles, la surface d'accouplement (40) permettant un déplacement relatif entre la première console (20) et la deuxième console (30).

2. Console de support pour un bloc moteur (10) selon la revendication 1, dans lequel:
la première surface de paroi (22) est fixée sur une surface de paroi latérale interne (3a) de l'élément de châssis inférieur (3); et
un espacement entre les parties d'accouplement (23a) sur la première surface de paroi (22) est plus grand qu'un espace entre la plate-forme de support (21) et une surface latérale supérieure (3b) de l'élément de châssis inférieur (3).

3. Console de support pour un bloc moteur (10) selon l'une quelconque des revendications 1 et 2, dans lequel:
la surface d'accouplement (40) comprend une multitude de points d'accouplement (21a) arrangés dans une direction longitudinale d'une carrosserie de véhicule (1)
la surface d'accouplement (40) est agencée de sorte à être proche de la plate-forme de support (21) et d'un support de ressort de suspension (5) contenu dans le compartiment moteur (2).

4. Console de support pour un bloc moteur (10) selon l'une quelconque des revendications 1 à 3, dans lequel:
la deuxième console (30) comprend une surface de paroi d'accouplement (32) destinée à être connectée au support de la suspension (5), d'une seule pièce avec la deuxième surface de paroi (31).

5. Console de support pour un bloc moteur (10) selon l'une quelconque des revendications 1 à 4, dans lequel:
la première surface de paroi (22) de la première console (20) comprend une partie d'extrémité concave (26) au niveau d'un côté du support du ressort (5).

6. Console de support pour un bloc moteur (10) selon l'une quelconque des revendications 1 à 5, dans lequel:
la première console (20) comprend une ou plusieurs premières nervures (50) et une ou plusieurs deuxièmes nervures (51) formées d'une seule pièce sur la surface d'accouplement (40), la plate-forme de support (21) et la surface arrière de la première surface de paroi (22); et
les premières nervures (50) assurent la connexion de la première surface d'accouplement (40), de la plate-forme de support (21) et de la première surface de paroi (22) au niveau de leurs surfaces arrière, les deuxièmes nervures (51) croisant les premières nervures (50).
